# EUROPEAN PATENT SPECIFICATION

(11) **EP 1 360 472 B1**
(45) Date of publication and mention of the grant of the patent: **02.12.2009**
(21) Application number: 02763187.8
(22) Date of filing: 14.02.2002
(51) Int. Cl.: G01N 21/49, B01L 3/00, G01N 21/03, B81B 1/00

(54) **MICROFLUIDIC SYSTEMS WITH ENHANCED DETECTION SYSTEMS**
MIKROFLUIDISCHE SYSTEME MIT VERBESSERTEN DETEKTIONSSYSTEMEN
SYSTEMES MICROFLUIDES AVEC SYSTEMES DE DETECTION RENFORCES

(30) Priority: 15.02.2001 US 269174 P
(43) Date of publication of application: 12.11.2003
(73) Proprietor: Caliper Life Sciences, Inc., Mountain View, CA 94043-2234 (US)
(72) Inventor: CHIEN, Ring-Ling, San Jose, CA 95129 (US); WOLK, Jeffrey, A., Half Moon Bay, CA 94019 (US); SPAID, Michael, Sunnyvale, CA 94086 (US); MCREYNOLDS, Richard, J., San Jose, CA 95125 (US)
(74) Representative: Kiddle, Simon John
(86) International application number: PCT/US2002/004480
(87) International publication number: WO 2002/103323

(56) References cited:
- WO-A1-01/20309
- WO-A1-99/44217
- GB-A- 1 407 247
- US-A- 4 330 206
- US-A- 5 599 503
- US-A- 5 928 880

## Description

### CROSS-REFERENCE TO RELATED APPLICATIONS

This application claims priority to Provisional Patent Application No. 60/269,174, filed February 15, 2001, which is hereby incorporated herein in its entirety for all purposes.

### BACKGROUND OF THE INVENTION

Microfluidic devices and systems have been developed that give researchers substantial advantages in terms of the miniaturization, automation and integration of a large number of different types of analytical operations. For example, continuous flow microfluidic devices have been developed that perform serial assays on extremely large numbers of different chemical compounds, e.g., for use in high-throughput pharmaceutical screening operations (see, e.g., U.S. Patent Nos. 5,942,443 and 6,046,056). Other microfluidic devices have been developed that perform rapid molecular separations on a number of different samples in relatively short time frames (see, U.S. Patent No. 5,976,336). All of these devices and systems share the ability to rapidly perform a wide range of different analytical operations.

Planar microfluidic analytical systems have a large number of advantages in terms of speed, accuracy and automatability. Despite these advantages, these planar channel systems suffer from a problem that is common to conventional capillary analytical systems. In particular, capillary systems, because of their extremely small volumes, can suffer from severely restricted sensitivity due to the simple lack of detectable amounts of material. For example, detection of materials in capillary or planar channel systems is typically accomplished by detecting signals from the channels in a direction orthogonal to the plane of the capillary or channel. This results in only the small amount of material that is present at the detection spot being subjected to the detection operation at any given time. In many cases, this deficiency is overcome using labeling techniques that have higher quantum yields of detectability, e.g., through fluorescence, chemiluminescence, radioactivity, etc. Of course, the use of these detection schemes requires the presence of a natural or added label that is detectable by these schemes. In many interesting analytical reactions, such labels are not readily available, or will themselves have a deleterious effect on the reaction to be analyzed.

As a result of reduced sensitivity, it previously has been difficult to utilize a number of different detection strategies in microfluidic systems, e.g., those strategies that have lower quantum detection yields or rely for sensitivity on the detection path length. For example, detection of low concentrations of analytes has been difficult in such systems, as has detection based upon non-fluorescent optical means, e.g., detection based upon absorbance.

Accordingly, it would be highly desirable to provide microfluidic systems that overcome these previously encountered shortcomings of microfluidic technology, namely, systems that have enhanced sensitivity for optical detection. The present invention meets these and a variety of other needs.

### SUMMARY OF THE INVENTION

The present invention generally provides systems and methods for performing analytical operations in microscale fluidic channels, wherein those systems and methods have enhanced sensitivity for optical detection.

In a first aspect, the present invention provides systems of detecting optically detectable materials in microscale channels. The systems include at least a first detection channel segment and an optical detector that is oriented to direct a detection path through the detection channel segment. The detection path is through the channel segment and substantially parallel to the longitudinal axis of the detection channel segment, e.g., the angle between the detection path and the longitudinal axis is approximately 0°.

### BRIEF DESCRIPTION OF THE FIGURES

Figures 1A and 1B schematically illustrate the relative orientation of the detection channel and detection system of a conventional microfluidic system as compared with a microfluidic system of the present invention, employing a detection path that is along the length of the detection channel segment.
Figure 2A and 2B schematically illustrates a comparison of a conventional system and a detection system used in accordance with the present invention, illustrating advantages of the present system.
Figures 3A and 3B schematically illustrate an alternate exemplary configuration of a microfluidic device and detection system in accordance with the present invention.
Figure 4 illustrates an exemplary optical detection system for use in conjunction with the present invention.
Figure 5A illustrates a microfluidic device employing a detection channel as envisioned by the present invention. A close-up view of the detection channel segment is provided in Figure 5B. Figures 5C and 5D illustrate different views of an alternate configuration of a device having a detection channel in accordance with the present invention.
Figure 6 is a plot of absorbance of a sample material passing through a detection channel segment.

### DETAILED DESCRIPTION OF THE INVENTION

The present invention is generally directed to microfluidic systems that have enhanced optical detection capabilities over previously described microfluidic systems. In particular, the present invention provides microfluidic devices that include channel segments that are oriented to provide optical detection through a sample material via an increased detection path length and/or sample material volume as compared to systems using conventional detection schemes where the detector is positioned to detect orthogonally to the detection channel segment. For example, in one embodiment, the detection path is along the length and parallel to the detection channel segment as opposed to in a direction orthogonal to the channel segment. By orienting the detection channel so as to direct and/or receive light in a direction parallel to the channel, e.g., the detection path is along the longitudinal axis of the detection channel segment, one can increase the sensitivity of the detection system. For example, in absorbance-based detection systems signal level, and thus sensitivity, is proportional to the detection path length. Therefor, by increasing detection path length, one increases the signal level and sensitivity of the assay.

In addition to providing for detection along the longitudinal axis of the detection channel segment, the systems of the present invention orient the detection channel segment orthogonally to the primary plane of the body structure of the microfluidic device. By doing this, one can detect along the length of the detection channel segment using conventional detection systems/device orientations, e.g., that direct a detector at an upper or lower surface of a microfluidic device, rather than at a side or edge of such a device. This provides the additional advantage of not requiring the incorporation of light guides within the body structure of the microfluidic device to ensure optimal transmission of signal through the body, as would be required in an edge directed detector. See, e.g., Liang et al. Anal. Chem. 1996, 68(6):1040-1046. Thus, the present invention permits enhanced detection, while using conventional systems and without requiring complex optical elements within the body of a microfluidic device.

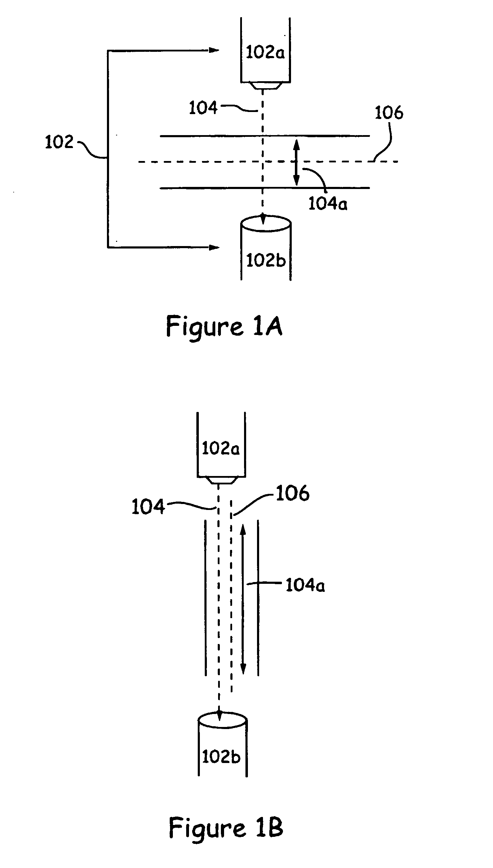

This system orientation is schematically illustrated in Figures 1A and 1B. In particular, the systems of the present invention include a channel segment 100 containing a volume of fluid having a concentration of a first detectable component disposed therein. Also included is a detection system 102 (shown as including light source 102a and detector 102b) disposed in sensory communication with the channel segment 100 such that the detection path 104, e.g., the path from which the detector detects the detectable signal, passes through the detection channel segment. As shown, the detection system is an absorbance detector that primarily comprises a light source 102a and a light detector 102b for detecting the amount of light transmitted through the sample material. As used herein, the phrase "in sensory communication with a channel segment" refers to the positioning of a detection element, e.g., an optical detector, relative to the channel segment, such that the detector can detect a detectable signal from the channel segment, or a material disposed in the channel segment. In the case of optical detectors, sensory communication denotes the ability of the detector to receive optical signals from a material disposed within the channel segment, e.g., sample materials and the like.

In conventional microfluidic systems, e.g., as shown in Figure 1A, the detection path is orthogonal to the longitudinal axis 106 of the channel segment. As a result, the length of that portion of the detection path (represented as arrow104a) that passes through the channel segment is substantially equal to the cross sectional dimension of the channel segment, e.g., its depth, width, or in the case of cylindrical channels, its diameter. This yields a relatively short detection path length that is defined by the cross sectional dimension of the detection channel (for non-absorbance based detection systems, this also results in a smaller amount of material from which to detect a signal). In cases where the detectable material is at relatively low concentrations, there may not be sufficient material present in the detection path to reach the limit of detection of the detection system used. For example, the detection path may be sufficiently short that it does not absorb any measurable amounts of light.

In accordance with the present invention, the detection channel segment is oriented relative to the detector such that the detection path length through the channel segment is longer than simply the cross-sectional dimension, e.g., the depth, width or diameter. Figure 1B illustrates an example of a system according to the present invention where the detection system 102 is oriented such that the detection path 104 passes substantially through the length of the detection channel segment 100, and is parallel to the longitudinal axis 106 of that channel segment. In this case, the portion of the detection path 104 (the portion is illustrated as arrow 104c), is substantially longer than in the case of Figure 1A and is limited primarily by the length of the channel segment 100.

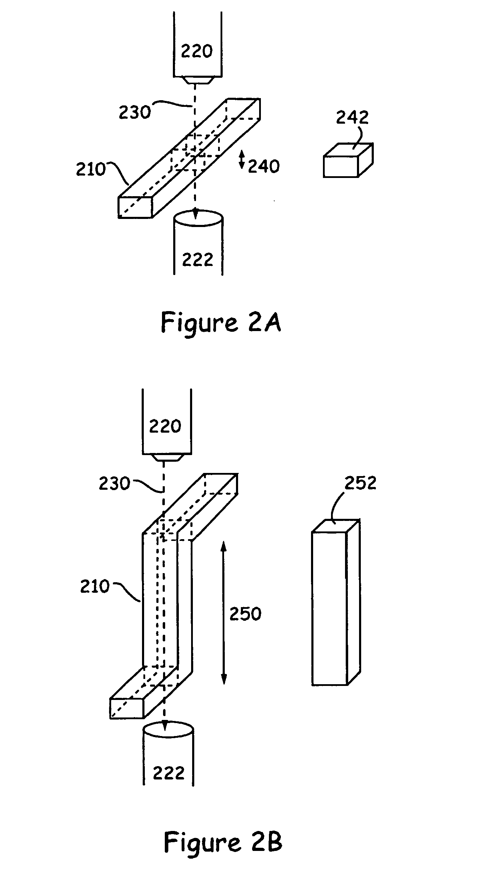

The present invention is further schematically illustrated in Figure 2A and 2B. Figure 2A illustrates a conventional system incorporating a microscale channel 210, e.g., a capillary lumen or channel in a planar microfluidic device, in which an optical detection system (that is shown as including light source 220 and transmittance detector 222) is directed at the channel in a direction orthogonal to the plane of the channel. This orientation is typical in microfluidic systems where channels are in the main plane of the planar body of the microfluidic device. This results from the channels being defined at the interface of two or more laminated planar substrate layers. This orientation results in a relatively short detection path length 240. This orientation also results in a much smaller quantity of material 242 from which detection is sought. This is of particular concern in, e.g., fluorescence based detection systems, where sensitivity is obtained by increasing the amount of emitted light from the sample.

Where the concentration of the material to be detected is sufficiently high in the sample material such that the detection path length 240 through volume 242 contains a detectable amount of material, then detection sensitivity is not a concern, and the detection path length can be relatively short. However, in many cases where the concentration of material in the detection volume 242 is sufficiently low, detection path length 240 will be too short to provide for adequate detection, e.g., the detection path will be too short to absorb any measurable amounts of light.

Figure 2B illustrates the configuration in accordance with the present invention that increases the detection path length and/or the volume of material that is subject to detection and thereby increases the sensitivity of that detection. In particular, in this system configuration, the detection system 220/222 is oriented relative to the detection channel 210 such that the detection path is in a direction that is parallel to and through the plane of channel segment 210, such that the detector is capable of detecting material through a much longer detection path length 250, e.g., through the length of material volume 252, also shown separate from the channel for illustration purposes (and thereby being capable of detecting much more material, even though such material might be at the same concentration as in Figure 2A). One can readily adjust the detection path length, as well as the amount of material that is detected, by varying the length of the detection channel segment 210. A primary feature of this particular embodiment of the invention is that the detector directs and/or receives optical signals in the same plane as, e.g., parallel to and along the axis of the detection channel segment.

Although described primarily in terms of absorbance detection that is proportional to detection path length, it will be appreciated that the present invention is also useful in other types of detection, e.g., fluorescence based detection. In such instances, the signal is proportional to the amount of labeled material that is subject to detection. Assuming a uniform concentration of such material in a sample, then the amount of material subject to detection is proportional to the volume of material subject to detection. As can be seen from Figures 2A and 2B, the present invention shown in Figure 2B provides for larger detection volume 252 as compared to the detection volume 242 of conventional systems as shown in Figure 2A. In the cases of fluorescence based detection, a standard fluorescence detection system is employed, e.g., as in an Agilent 2100 Bioanalyzer system.

In accordance with the present invention, the detection path length typically is a function of thickness of the center layer of a layered microfluidic device. Specifically, the detection channel is provided as a via through the center substrate, e.g., as described in greater detail below. As such, the length of that channel is substantially defined by the thickness of that substrate. In the case of glass or quartz substrates, the thickness can vary from about 0.2 mm to 10 mm or even greater, depending upon the needs of the particular application to which the device is to be put. Other substrates can be used that are substantially thinner, including metal or polymer films, silicon substrates, etc. Typically, substrates are selected that are thinner than about 1 mm. In general, the detection path length is from about 10 µm to about 1 mm, and is preferably from about 50 µm to about 500 µm in length, and more preferably from about 100 to about 250 µm in length. Further, it is generally preferred that the cross-sectional area of the detection channel segment be comparable to the cross sectional area of at least the channel that feeds material into that detection channel segment, and more preferably, all channel segments that are fluidly connected to the detection channel segment. As used herein, the phrase "fluidly connected," "fluid communication" or derivations of these terms refer to the communication between two or more channels, chambers or other structures capable of containing fluid, whereby fluid would be able to freely pass, e.g., no mechanical barriers. Such fluid communication may be direct, e.g., a first channel intersecting a second channel, or it may be indirect, e.g., a first and second channel communicating via one or more additional channels or channel segments.

By closely matching cross-sectional areas of the various channels, one substantially reduces the likelihood of dead zones within the junction between the channels of the device, e.g., the first channel and the detection channel, that can result in convective flow patterns that can disrupt the cohesiveness of discrete plugs of fluid sample materials. In particular, the detection channel segment typically comprises a cross sectional area that is from about 0.1 to about 5 times the cross-sectional area of at least the channel that feeds the detection channel. Preferably, the cross-sectional area of the detection channel segment is from about 0.5 to about 2 times the cross-sectional area of the channel feeding the detection channel. In still more preferred aspects, the cross sectional area is within about 10% of the cross-sectional area of the channel feeding that channel, e.g., from about 0.9 to about 1.1 times the area. For the same reasons offered above, it is generally desirable to minimize the volume of the detection channel, while optimizing the detection path length through the detection channels. As such, the detection channel segment will typically have a volume that is less than 100 nl, preferably, less than 10 nl, and more preferably, less than 1 nl.

The systems of the present invention employ planar microfluidic channel networks that typically are fabricated from two or more substrate layers. In general, such planar devices include a first channel or network of channels that is defined between a first and second substrate layer, and contained within a first plane defined by the two substrate layers. In particular, the two or more planar substrates are bonded together on their broad planar surfaces to produce a body that is also planar in structure, and has the channels defined within its interior at the interface of the two or more original substrates. In accordance with the present invention, a detection channel segment is provided that is orthogonal to the first plane and in fluid communication with the first channel or network of channels and is disposed through the second substrate layer, e.g., as a via. In preferred aspects, a second channel or network of channels is disposed between the second substrate layer and a third substrate layer, so that the detection channel segment provides a fluid junction between the first and second channel networks.

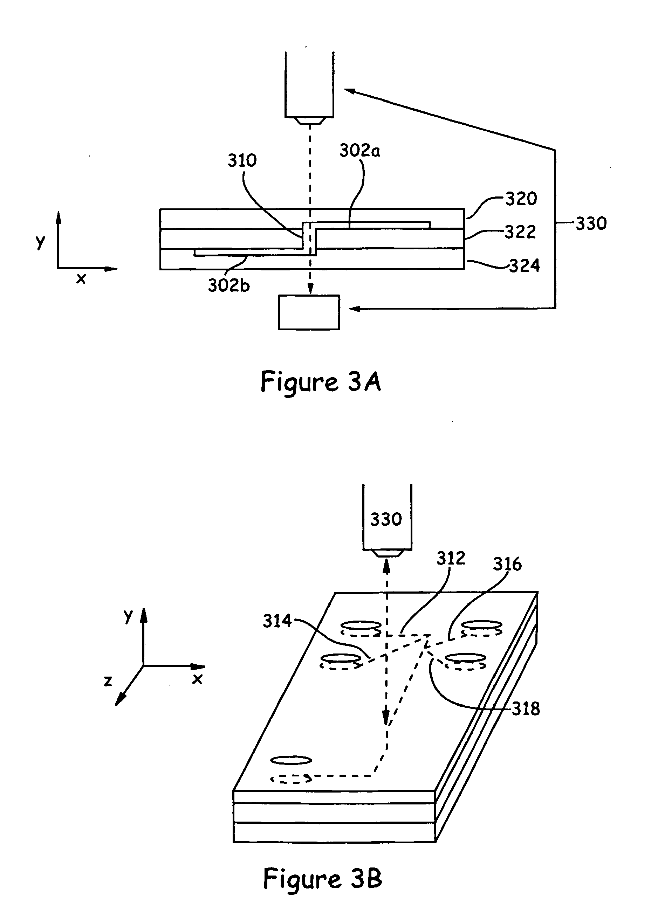

A schematic example of a device employing this structure is provided in Figure 3. As shown, a first channel 302a or channel network is disposed between first and second substrates 320 and 322, respectively. A second detection channel segment is provided as a via 310 through the second substrate 322. As shown, this via 310 fluidly communicates with a third channel segment 302b or channel network, which is defined between substrates 322 and 324. As shown the first channel or channel network is fabricated as a groove in the first substrate layer 320, while the third channel network is fabricated into the third substrate layer, with the second substrate layer sealing the grooves to define the respective channels. However, it will be appreciated that in certain preferred aspects, the channels would be fabricated into the middle or second substrate 322, in order that all microfabrication takes place on one single substrate. In particular, one could etch all of the requisite channels or channel networks on opposite sides of a single substrate, and provide a via through that substrate. Sealing the central substrate then involves sandwiching the second substrate between two outer substrate layers, e.g., the first and third substrates.

The channels of the device are fabricated first as grooves in a first planar surface of one of the substrates. Fabrication techniques often depend upon the types of substrates used. For example, silica based substrates are generally fabricated using photolithographic techniques followed by wet chemical etching of the grooves into the surface of the substrate. Polymeric substrates, on the other hand, can have the grooves embossed into the planar substrate surface, or molded into the surface using, e.g., injection molding techniques. Other techniques, such as LIGA techniques, laser ablation techniques, micro-machining techniques and the like are also optionally employed. A second substrate layer is then overlaid and bonded to the first substrate layer to seal the grooves as the enclosed channels of the device. A variety of different channel geometries can be effectively generated using these techniques, in order to accomplish a variety of different operations. Bonding OF aggregate substrate layers can be done by any technology useful in such cases, provided the process does not excessively interfere with the structures, e.g., channels, in the interior of the device. Examples of bonding methods include thermal bonding, anodic bonding and bonding by adhesives. Different bonding techniques may be selected based upon desired substrate composition and/or structural tolerances of the finished device.

In accordance with preferred aspects of the invention, the detector is oriented substantially perpendicular to the planar body structure of the device, e.g., as is conventionally done in microfluidics systems. This allows use of conventional instrumentation, e.g., an Agilent 2100 Bioanalyzer, in detecting from the microfluidic devices described herein. In order then to orient the detection channel in the plane parallel to the detection light, the present invention provides channel networks that include detection channel segments that extend out of the plane of the planar device, itself. In particular, such devices include a first channel portion that is in the plane of the overall body structure by virtue of being defined between two planar substrates. A second channel segment, e.g., the detection channel segment, extends out of that plane, e.g., perpendicular to the first channel plane, to provide the channel length along which detection is carried out. In typical preferred aspects, the detection channel segment is defined, at least in part, through one or more of the two planar substrates, e.g., as an aperture through substrate. The detector is then oriented to be directed over the detection channel segment so as to detect along the length of this segment. An example of a microfluidic device having this channel configuration and associated detector is illustrated in Figure 3A and 3B from side and perspective views.

As shown in Figures 3A and 3B and described above, a first channel segment 302a is defined between two planar substrates 320 and 322. The first channel segment is in fluid communication with the detection channel segment 310 that extends out of the plane of the first channel segment 302a, e.g., by being disposed through substrate 322. The detector 330 is then oriented to direct and receive light through the entire length of channel segment 310, e.g., by being directed through channel segment 310 from one end. Additional channel segments are optionally provided connected to the other end of the detection channel segment 310. For example, a third channel segment 302b is shown in fluid communication with detection channel segment 310. This additional channel segment 302b is defined between substrate 322 and 324 using, e.g., a multilayer chip configuration. As can be seen in this embodiment, the first and second channel segments 302a and 302b run in or parallel to a first plane, e.g., as shown by the x axis, while the detection channel segment 310 runs in or parallel to a second plane (as shown by the y axis) that is perpendicular to the first plane. The detector 330 is then directed to be parallel with the second plane, e.g., directed along the length of the detection channel segment 310.

Fabrication of the detection channel, e.g., channel segment 310, as a via through one substrate may be carried out by a number of methods. For example, in the case of polymeric substrate, the via may be molded into the substrate. Alternatively, the via may be laser ablated or drilled through polymer substrates. In the case of silica-based substrates, e.g., glass, quartz or silicon, the via may be either drilled or etched through the substrate using similar techniques as used in the fabrication of the channel networks. In certain cases, it may be preferred to employ a silicon substrate as that substrate through which the via is fabricated. Specifically, as a monocrystalline substrate, allows a straighter etch path through the silicon, as compared to a broadening etch pattern from the isotropic etching of other substrates such as glass and quartz, where etching extends laterally outward from the etched surface, as well as into the etched surface. This permits the etching of an extremely small via through the middle substrate layer, e.g., as small as 10 µm diameter. The semi-conductive nature of silicon substrates, however, necessitates the use of an insulating coating, e.g., SiO₂, where the device is to be used in an application where electrical currents are applied, e.g., those applications employing electrokinetic movement of materials. In many cases, however, only pressures are employed to move materials and no coating is necessary. Providing insulating coatings on silicon substrates is well known in the art. See, e.g., VLSI Fabrication Principles, Ghandi. In such cases, the use of a silicon intermediate layer and glass or quartz outer layers provides consistent surface properties, e.g., both are SiO₂. In fabricating devices of dissimilar materials, e.g., quartz outer layers and silicon or glass intermediate layers, materials are generally not bonded by conventional thermal bonding. In particular, because silicon or conventional glass, e.g., soda lime, and quartz have significantly different thermal expansion coefficients, thermal bonding is more likely to fail, as the different materials expand differently during the bonding process. Accordingly, where different materials are desired, bonding is generally carried out through non-thermal means, e.g., by adhesive bonding. In particularly preferred aspects, adhesives useful in bonding glass, silicon and quartz are generally commercially available and may vary depending upon a particular application, including, e.g., Optocast 3505-VLV from Electronic Materials Inc, Breckenridge, CO. The adhesive is generally applied by providing additional, typically wider channels between aggregate substrate layers, which channels communicate with an edge of the substrate or an open reservoir in the mated substrate layers, e.g., when the layers are assembled or bonded with water in a nonpermanent fashion, i.e., prior to thermal fusing. Adhesive is then applied to these channels and allowed to wick into the space between the substrate layers. Alternatively, the adhesive is applied to the junction of the aggregate layers, e.g., at the edge, and the adhesive is permitted to wick between the assembled aggregate layers. Alternatively, the adhesive is contact applied, e.g., using a roll or pad, followed by assembly of the aggregate layers of the device.

In operation, the devices and systems of the invention perform one or more analytical operations followed by detection of the results of the one or more operations within the detection channel region. By way of example, and with reference to the device of Figure 3, reaction components are introduced into channel segment 302a, e.g., from one or more of side channels 312, 314, 316 and 318. The product of a reaction of these reagents is then moved along channel segment 402a and through channel segment 310. Once within channel segment 310, the detector 330 then detects the reaction products, until they move out of the detection channel segment 310 and into channel segment 302b.

As noted above, the systems of the present invention typically employ optical detection schemes, e.g., based upon the absorbance, fluorescence, transmissivity, etc. of the contents in the detection channel segment. In accordance with the present invention, one can use either less sensitive optical detection schemes, e.g., absorbance based systems, or one can gain substantial sensitivity using fluorescent detection. For example, in a number of biochemical analyses, it would be desirable to employ UV absorbance based detection, e.g., to detect the presence of complex chemical structures, i.e., nucleic acids, polypeptides, etc. However, in conventional capillary and microfluidic systems, volumes are too small to detect typical concentrations. In accordance with the present invention, however, the volumes that are subjected to detection are increased, allowing more sensitive detection using these methods. Alternatively, where fluorescent detection methods are employed, increasing the volume of the detected material substantially increases the sensitivity of that detection.

Based upon the foregoing, it will be appreciated that the detector employed in the systems of the invention may include a number of different detector types, including epifluorescent detectors that include a light source, e.g., a laser, laser diode, LED or the like. The light source is directed at the detection channel segment using an appropriate optical train, which also collects fluorescence emitted from the detection channel segment. Examples of fluorescent detectors are well known in the art.

In preferred aspects, an absorbance detector is employed in the systems of the invention. In order to detect the amount of light that is transmitted through the detection channel segment and by subtraction, the amount of light absorbed by the material in the channel, the light source and detector are typically disposed on different sides of the detection channel segment, e.g., a light source disposed above the planar substrate or proximal to one end of the detection channel segment, e.g., as indicated by the detector 220 in Figure 2A and B, and the detector 222 disposed below the detection channel or proximal to the other end of the detection channel segment. As used herein, the term proximal does not denote a particular distance but is used to denote relative position, e.g, of the detector components (light source and detector), relative to the detection channel and each other. Again, absorbance based detectors are well known in the art and are readily configured for use in the systems of the present invention. In preferred aspects, such absorbance detectors include light sources that produce light in the UV range of the spectrum, for use in detecting materials of interest, e.g., proteins, nucleic acids, etc.

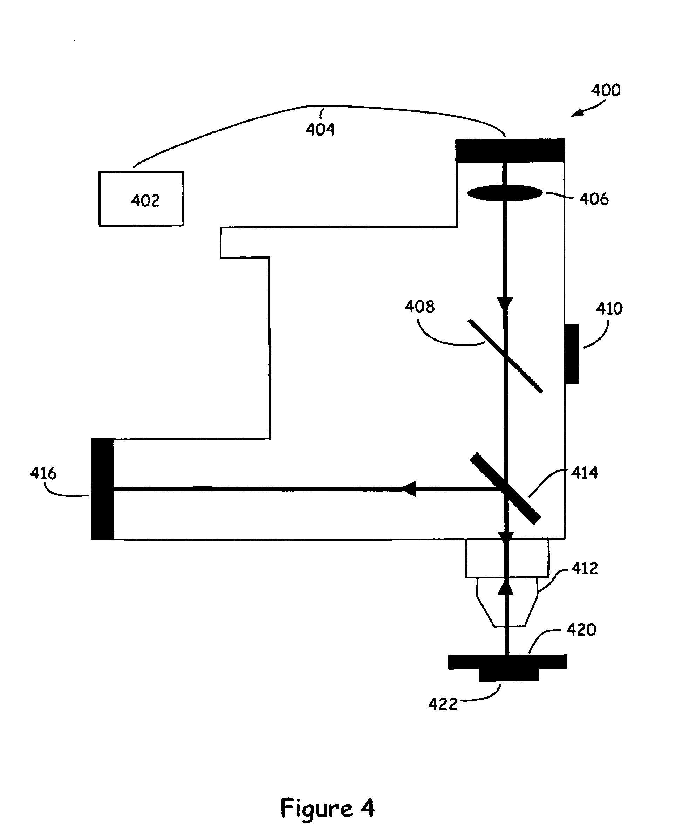

An exemplary absorbance detector unit is illustrated in Figure 4. As illustrated, the detector 400 includes a light source 402. The specific light source is generally selected for broadest application or to provide light that is particularly suited for a given application. This includes arc lamps, lasers, or the like, e.g., mercury arc lamp, deuterium lamp, or the like. As shown, the light from the source 402 is directed into an optical train within the body of the detector 400 via an optical fiber 404. The light then passes through a collimating lens 406. A first beam splitter 408 is provided to divert a portion of the light onto a reference detector 410, while permitting the remainder (typically a substantial percentage, e.g., 95+%) of the light to pass through.

The remainder of the light is directed through an objective lens 412 that focuses the light in the detection channel segment within the microfluidic device 420. That portion of the light that is not absorbed by the sample in the detection channel is then detected by the signal detector 422. Changes in this signal that result from changes in that absorbance of the material flowing through the detection channel are then identified and quantified.

In an optional aspect a second beamsplitter 414 is provided in the optical train which directs a portion of the reflected light signal from the microfluidic device 420 onto a CCD camera 416. This allows the operator to manually position the detector over the detection channel segment in the microfluidic device. In particular, light reflected from the microfluidic device is gathered by the objective lens 412 and directed back to the second beamsplitter 414 and focused onto the CCD camera 416, where the detection channel segment, or an indicator of that channel's location, is imaged. Once the image is observed, the objective 412 is moved to maximize the amount of light striking the detector 422. The objective 412 is then lowered to a desired height offset from the middle of the device 420 where the detection channel is located. Further optimization of positioning is carried out by adjusting the objective in all three dimensions to maximize the amount of light hitting the detector 422. In optional aspects, fluorescence detection elements are optionally or alternately employed in the detection system, e.g., employing an emission filter and a photodiode or PMT in place of the CCD camera shown in the exemplary detector of Figure 4. In some cases, it may be desirable to provide a barrier that prevents excess light from being detected by the detector, and thereby reducing the resolution and sensitivity of the system, e.g., by allowing light that has not passed through the sample to impact the detector, thereby giving an inaccurate absorbance reading for the sample. This can be accomplished by placing the device within a light sealed chamber but for access by the detector, e.g., through an aperture over the detection channel segment. Alternatively, the device itself may be provided with a barrier layer that includes an aperture over the detection channel segment. Such layers may include applied layers that are then etched or ablated to provide an aperture over the detection channel segment. Alternatively, a film layer having such an aperture may be overlaid on the surface of the device. These barriers function as spatial filters to filter out scattered light both within and from without the detection channel segment.

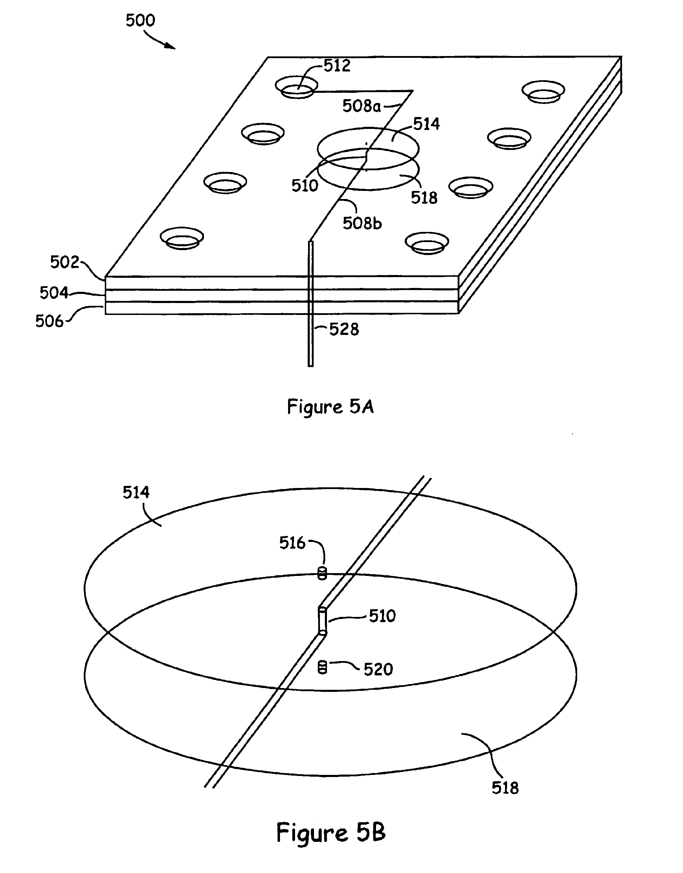

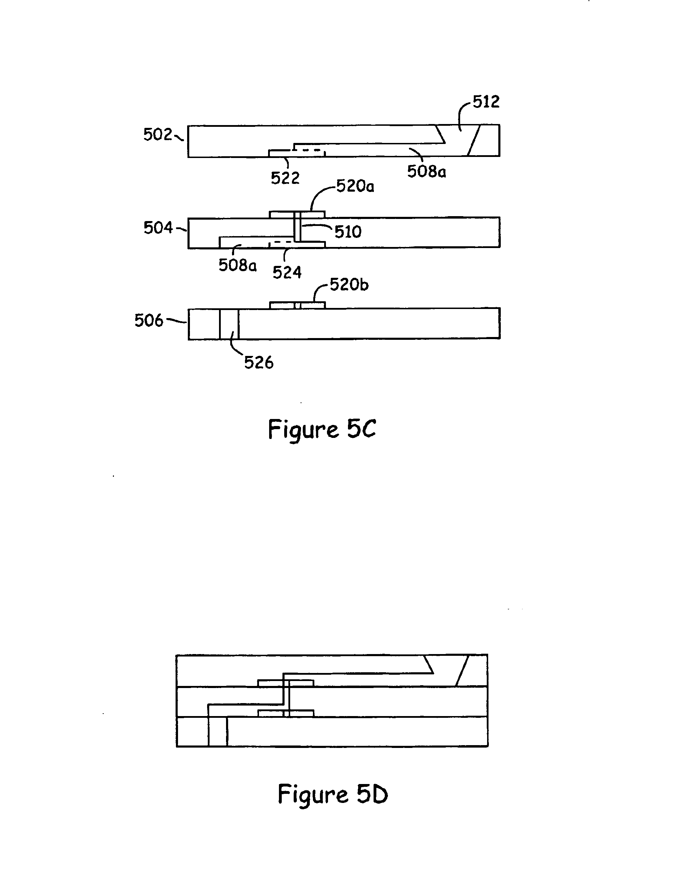

In a further alternative, the detection channel segment may be fabricated in a non-transparent substrate, e.g., silicon, in order to cut back on reflected light levels that are detected. Similarly, additional intermediate layers may be provided that accomplish the same goals, e.g., reduce reflected light while providing a small aperture for detection. By way of example, a metal layer may be applied over the detection channel, with a small aperture disposed over the detection channel to permit the passage of light. As with the use of a nontransparent intermediate layer, in order to ensure maximum light directed into and exiting out of the detection channel, it is generally desirable to provide the spatial filter, e.g., the aperture, as close to the detection channel segment as possible, or if possible, provide the detection channel segment as the aperture or transparent region through the intermediate layer. As a result, in preferred aspects, the metal layer is provided on one or both surfaces of the intermediate substrate, and the detection channel itself forms the aperture. One method of fabricating the device of this structure is illustrated in Figure 5C. As shown, the overall device includes upper, lower and intermediate substrate layers (502, 504 and 506, respectively). A first channel segment or network 508a is provided in one or both of the interfacing surfaces, e.g., the surfaces that face each other and are mated together in the assembled device, of the upper and intermediate substrates so as to define a channel segment or network between the upper substrate and intermediate substrate 504, while a second channel segment or network 508b is fabricated into one or both of the interfacing surfaces of the lower and intermediate substrates, so as to provide a channel segment or network between the lower substrate layer 506 and the intermediate substrate layer 504. Detection channel segment 510 is shown provided through the intermediate substrate layer 504, linking the first channel segment to the second channel segment. As shown, a metal surface 520a and 520b is provided on the upper surfaces of the lower and intermediate substrate layers such that the metal layer is positioned in the assembled device to surround the junctions of the detection channel with the first and second channel segments or networks 508a and 508b, respectively. In this case, the sputtered metal is in an "O" shape surrounding the opening of the detection channel segment, and forms a light barrier layer surrounding the opening of the detection channel segment. In order to accommodate the additional material on the surface of the intermediate layer, or optionally, on the upper and lower layers, one can provide a receiving cavity or well 522 and 524 on the opposing substrate to receive the additional material and thus allow voidless bonding of the various layers. The lower layer is illustrated as including an opening 526 for receiving a pipettor element or capillary, e.g., capillary 528 from Figure 5B.

The metal layer is generally applied by known methods including sputtering methods familiar to those skilled in microfabrication techniques, e.g., sputtering, CVD, etc. while the receiving wells are fabricated by the same methods used to fabricate the channel segments or networks, e.g., wet chemical etching, etc., of silica based substrates or injection molding, embossing or laser ablation, etc., of polymeric substrates. Figure 5D illustrates the assembled configuration of the device shown in Figure 5C.

In an exemplary device, the sputtered metal "O" is provided at a thickness of about 0.8 µm where the open center of the layer has an inner diameter (ID) of approximately 80 µm and an outer diameter (OD) of approximately 300 µm. The receiving wells are then provided with comparable or slightly larger dimensions to accommodate the additional sputtered material.

As can be seen from the above-described examples, the spatial filter may be provided on an exterior surface of the completed or assembled body structure, e.g., as shown in Figures 5A and B, or it may be provided within the interior region of the assembled body structure, either as an inserted structure, i.e., a metal o-ring, e.g., as shown in Figure 5C and 5D, or as an aperture in an intermediate opaque layer that is integral to or separate from the substrate through which the via is disposed. The spatial filters on either end are provided either at the ends of the detection channel segment or between the ends of the detection channel segment and the relevant portion of the overall optical detection system, e.g., the light source and/or the optical detector.

As described above, the present invention typically involves an improved configuration of an analytical channel network and the detector used to detect materials within that channel network. Typically, previously described microfluidic systems fill out the remainder of the elements employed in these systems. For example, overall microfluidic systems also typically employ a fluid direction and control system that causes and directs the flow of fluids within the microfluidic channel networks. Such flow control systems are preferably a combination of a pressure controller system, e.g., a pressure or vacuum source applied to one or more ports in the channel network, as well as a channel network configuration that is optimized to yield a particular flow profile under the applied pressure differentials in the system. For example, in some preferred cases, a single vacuum source is applied to one port in a microfluidic channel network. Relative flow rates of materials in all of the various channels is then controlled by the designed flow resistance of the channels of the device. In alternate methods, multiple pressure and/or vacuum sources are applied to a plurality of different ports of the device to regulate pressure differentials across different channels of the device at different times, to control the flow profiles within the device. Such multiport pressure controllers are described in, e.g., U.S. Patent Application No. 60/216,793, filed July 7, 2000, and incorporated herein by reference in its entirety for all purposes.

In alternative embodiments, the devices of the invention employ electrokinetic material direction systems. Electrokinetic systems typically operate by applying electric fields through channels in order to cause the movement of materials through those channels. Electrokinetic movement can include one or both of electrophoresis and electroosmosis.

Electrokinetic material direction systems in microfluidic channel networks typically include electrodes placed at the termini of the various channels of the channel network, e.g., at reservoirs or ports disposed at those unintersected termini. Each electrode is then coupled to one or more power supplies that deliver controlled electrical currents through the channels of the device to drive the movement of material either through electrophoresis or electroosmosis. Examples of such systems include the Agilent 2100 Bioanalyzer and associated Caliper LabChip® microfluidic devices. Electrokinetic control of material movement in microfluidic channel networks has been described in detail in, e.g., U.S. Patent Nos. 5,588,195 and 5,976,336, each of which is incorporated herein by reference for all purposes. Generally, such systems employ pin electrodes that contact fluid filled reservoirs at the termini of the channels, to deliver electrical current through the various channels of the network. By controlling the amount, duration and channels through which current is applied, one can precisely control the direction and velocity of material movement through those channels. Alternatively, electrical circuits are included on the microfluidic device and are interfaced with controllers via one or more slide connectors. These instruments can be readily configured to operate in accordance with the present invention, e.g., by including an improved channel network such as those described herein, interfaced with the controller-detector instrument.

### EXAMPLES

### Example 1: Efficacy of Orthogonally Oriented Detection Channel Segment

A microfluidic system employing an absorbance detection scheme was assembled employing the detector shown in Figure 4. In addition, the system employed a simple microfluidic device having the structure illustrated in Figures 5A and 5B. In particular, the device 500 was fabricated as an aggregate of three substrate layers 502, 504 and 506, where channel 508a was fabricated between substrates 502 and 504 while channel 508b was fabricated between substrates 504 and 506. The two channels were connected by a via 510 fabricated through substrate layer 504, that forms the detection channel segment. The via or detection channel segment 510 was disposed through the entire center substrate that had a nominal thickness of 700 µm. When added to the depth of the channels on either end, this yielded a detection path length of approximately 720 µm Channel 508a terminated at one end at reservoir 512, and at the other at via 510, while channel 508b terminated at one end at via 510 and at the other end at a sampling capillary 528. In order to ensure that the only detected light was that which had passed through the detection channel, metal disks 514 and 518 were placed over the surfaces of the device surrounding the detection channel segment. The disks included small apertures (50 µm) 516 and 520, respectively, that were positioned over the detection channel segment or via 510.

The detector was positioned as described above, with the signal detector placed below the device, e.g., below aperture 520. Specifically, the objective lens was positioned over the aperture 516 such that light from the light source was directed through the aperture and the detection channel segment and that aperture was imaged on the CCD. The Objective was then lowered by a distance equal to the offset in height between the aperture and the middle of the detection volume. The position was fine tuned by adjusting the position of the detector in all three dimensions to maximize the light that was incident on the detector.

The sampling capillary 528 was used to draw sample materials into channel 508b. This involved application of a negative pressure at reservoir 514 to sip sample materials from sample wells or tubes. After being drawn into channel 508b, the material moved into the detection channel segment 510 art which point it was subject to detection. The material then moved into channel 508a and out toward reservoir 512.

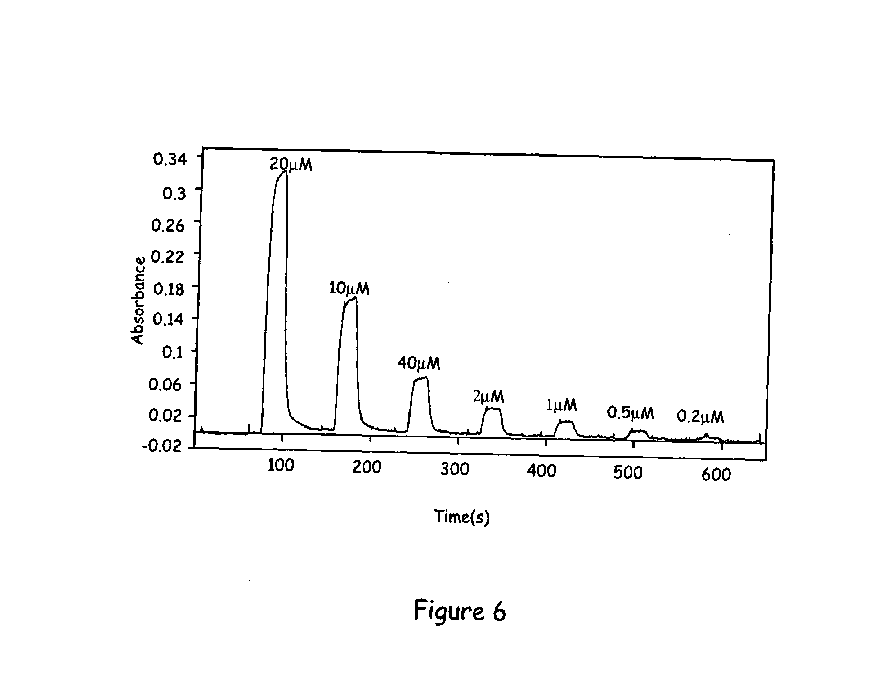

Sample plugs of 25mer DNA were sipped into the chip through the capillary element and moved into the detection channel segment. Successive plugs were introduced at regular intervals that contained diminishing concentrations of the 25mer (20 µM, 10 µM, 4 µM, 2 µM, 1 µM, 0.5 µM and 0.2 µM). The plot absorbance is shown in Figure 6. As can be seen, one can readily distinguish concentration differences from the absorbance of the different sample plugs, as detected in the system of the invention.

Comparative measurements were made of a one sample material in the 720 µm long detection channel segment, as described above, and at a 1/72 concentration in a conventional detection orientation, e.g., detection path length of 10 µm, that was the depth of the channel. A measurement of 250 µM solution in the 10 µm deep channel allowed 86% (absorbance = .061) of the light to hit the detector, while a 250/72=3.5 µM solution of the 25 mer traveling through the 720 µm through hole allowed 87% (absorbance = .065) of the light to pass through the sample. As can be seen, these measurements are roughly equivalent, indicating the efficacy of the present invention in measuring absorbance in relatively dilute sample materials.

## Claims

1. A microfluidic system having enhanced optical detection, comprising:
a microfluidic device and a detection system (330),
the microfluidic device comprising:
a body structure that is planar in a first plane, the body structure comprising at least first (320), second (322), and third (324) planar substrate layers, a first surface of the first substrate being bonded to a first surface of the second substrate, and a first surface of the third substrate being bonded to a second surface of the second substrate, the second surface of the second substrate being opposite to the first surface of the second substrate;
a first channel segment (302a) being defined at an interface of the first and second planar substrate layers;
a second channel segment (302b);
a detection channel segment (310) having a first and a second end, wherein the first end of the detection channel segment is in fluid communication with the first channel segment, and wherein the second end of the detection channel segment is in fluid communication with the second channel segment;
**characterised in that**:
the second channel segment is defined at an interface of the second and third planar substrate layers;
the detection channel segment is oriented substantially orthogonally to the first plane; and
the detection system (330) is in sensory communication with the detection channel segment and oriented to provide a detection path substantially along a longitudinal axis of the detection channel segment.

2. The microfluidic system of claim 1, wherein the detection system comprises an absorbance measurement system.

3. The microfluidic system of claim 2, wherein the absorbance detection system comprises:
a light source;
an optical train positioned proximal to the first end of the detection channel segment, wherein the optical train directs light from the light source through the first end of the detection channel segment; and
a light detector positioned proximal to the second end of the detection channel segment for detecting an amount of light that passes through the detection channel segment along the detection path.

4. The microfluidic system of claim 1, wherein the detection channel segment has a cross sectional area that is between about 0.1 and 5 times a cross sectional area of at least one of the first and second channel segments.

5. The microfluidic system of claim 1, wherein the cross-sectional area of the detection channel segment is from about 0.5 to about 2 times the cross sectional area of at least one of the first and second channel segments.

6. The microfluidic system of claim 1, wherein the detection channel segment is from about 10 µm to about 1 mm in length.

7. The microfluidic system of claim 1, wherein the detection channel segment is from about 50 to about 500 µm in length.

8. The microfluidic system of claim 1, wherein the detection channel segment is from about 100 to about 250 µm in length.

9. The microfluidic system of claim 1, wherein the detection channel segment comprises a volume that is less than 100 nl.

10. The microfluidic system of claim 1, wherein the detection channel segment comprises a volume that is less than 10 nl.

11. The microfluidic system of claim 1, wherein the detection channel segment comprises a volume that is less than 1 nl.

12. A method of performing an analytical operation in a microscale channel of a microfluidic system according to claim 1, comprising:
providing a planar microfluidic device having a detection channel segment;
introducing a sample material into the detection channel segment, the sample material comprising a concentration of an optically detectable material;
providing an optical detection path through the sample material in the detection channel segment; and
detecting an optical signal along the optical detection path
**characterised in that**:
the detection channel segment is substantially orthogonal to a major plane of the planar microfluidic device; and
the optical detection path through the sample material in the detection channel segment is at an angle that is substantially parallel to a longitudinal axis of the first detection channel segment.

13. The method of claim 12, wherein the step of detecting an optical signal comprises directing a light signal along the optical detection path and detecting an amount of fluorescence from the sample material.

14. The method of claim 12, wherein the step of detecting an optical signal comprises directing a light signal along the optical detection path and determining an amount of the light signal absorbed by the sample material.

15. The method of claim 12, further comprising providing a first channel disposed in the planar microfluidic device, the first channel being parallel to the major plane of the microfluidic device, and in fluid communication with the detection channel segment.

16. The method of claim 15, wherein the first channel is also in fluid communication with a sampling capillary that is attached to and extends from the microfluidic device, and wherein the step of introducing the sample material into the detection channel segment comprises drawing the sample material from a source of sample material into the sampling capillary and transporting the sample material into the first channel segment and into the detection channel segment.

## Patentansprüche

1. Mikrofluidisches System mit verstärkter optischer Detektion, umfassend:
eine mikrofluidische Vorrichtung und ein Detektionssystem (330),
wobei die mikrofluidische Vorrichtung Folgendes umfasst:
eine planare Körperstruktur in einer ersten Ebene, wobei die Körperstruktur zumindest eine erste (320), eine zweite (322) und eine dritte (324) planare Substratschicht umfasst, wobei eine erste Oberfläche des ersten Substrats mit einer ersten Oberfläche des zweiten Substrats haftschlüssig verbunden ist und eine erste Oberfläche des dritten Substrats mit einer zweiten Oberfläche des zweiten Substrats haftschlüssig verbunden ist, wobei die zweite Oberfläche des zweiten Substrats der ersten Oberfläche des zweiten Substrats gegenüber liegt;
ein erstes Kanalsegment (302a), das an einer Grenzfläche zwischen der ersten und der zweiten planaren Substratschicht definiert ist;
ein zweites Kanalsegment (302b);
ein Detektionskanalsegment (310) mit einem ersten und einem zweiten Ende, worin das erste Ende des Detektionskanalsegments in Fluid-Kommunikation mit dem ersten Kanalsegment ist, und worin das zweite Ende des Detektionskanalsegments in Fluid-Kommunikation mit dem zweiten Kanalsegment ist;
**dadurch gekennzeichnet, dass**:
das zweite Kanalsegment an einer Grenzfläche zwischen der zweiten und der dritten planaren Substratschicht definiert ist;
das Detektionskanalsegment im Wesentlichen orthogonal zur ersten Ebene ausgerichtet ist; und
das Detektionssystem (330) in sensorischer Kommunikation mit dem Detektionskanalsegment ist und so ausgerichtet ist, dass es im Wesentlichen entlang der Längsachse des Detektionskanalsegments einen Detektionspfad bereitstellt.

2. Mikrofluidisches System nach Anspruch 1, worin das Detektionssystem ein Absorptionsmesssystem umfasst.

3. Mikrofluidisches System nach Anspruch 2, worin das Absorptionsdetektionssystem Folgendes umfasst:
eine Lichtquelle;
einen Strahlengang, der proximal zum ersten Ende des Detektionskanalsegments ist, worin der Strahlengang Licht aus der Lichtquelle durch das erste Ende des Detektionskanalsegments leitet; und
einen Lichtdetektor, der proximal zum zweiten Ende des Detektionskanalsegments ist, zum Detektieren einer Lichtmenge, die entlang des Detektionspfades durch das Detektionskanalsegment hindurchtritt.

4. Mikrofluidisches System nach Anspruch 1, worin das Detektionskanalsegment eine Querschnittsfläche aufweist, die zwischen etwa dem 0,1- und 5 fachen einer Querschnittsfläche von zumindest einem von: dem ersten und dem zweiten Kanalsegment beträgt.

5. Mikrofluidisches System nach Anspruch 1, worin die Querschnittsfläche des Detektionskanalsegments von etwa dem 0,5- bis 2fachen der Querschnittsfläche von zumindest einem von: dem ersten und dem zweiten Kanalsegment beträgt.

6. Mikrofluidisches System nach Anspruch 1, worin das Detektionskanalsegment eine Länge von etwa 10 µm bis etwa 1 mm aufweist.

7. Mikrofluidisches System nach Anspruch 1, worin das Detektionskanalsegment eine Länge von etwa 50 bis etwa 500 µm aufweist.

8. Mikrofluidisches System nach Anspruch 1, worin das Detektionskanalsegment eine Länge von etwa 100 bis etwa 250 µm aufweist.

9. Mikrofluidisches System nach Anspruch 1, worin das Detektionskanalsegment ein Volumen von weniger als 100 nl umfasst.

10. Mikrofluidisches System nach Anspruch 1, worin das Detektionskanalsegment ein Volumen von weniger als 10 nl umfasst.

11. Mikrofluidisches System nach Anspruch 1, worin das Detektionskanalsegment ein Volumen von weniger als 1 nl umfasst.

12. Verfahren zur Durchführung eines analytischen Vorgangs in einem Mikromaßstab-Kanal eines mikrofluidischen Systems nach Anspruch 1, umfassend:
das Bereitstellen einer planaren mikrofluidischen Vorrichtung mit einem Detektionskanalsegment;
das Einbringen eines Probematerials in das Detektionskanalsegment, wobei das Probematerial eine Konzentration eines optisch detektierbaren Materials umfasst;
das Bereitstellen eines optischen Detektionspfades durch das Probematerial im Detektionskanalsegment; und
das Detektieren eines optischen Signals entlang des optischen Detektionspfades;
**dadurch gekennzeichnet, dass**:
das Detektionskanalsegment im Wesentlichen orthogonal zu einer Hauptebene der planaren mikrofluidischen Vorrichtung ist; und
der optische Detektionspfad durch das Probematerial im Detektionskanalsegment in einem Winkel ist, der im Wesentlichen parallel zu einer Längsachse des ersten Detektionskanalsegments ist.

13. Verfahren nach Anspruch 12, worin der Schritt des Detektierens eines optischen Signals das Leiten eines Lichtsignals entlang des optischen Detektionspfades und das Detektieren einer Fluoreszenzmenge aus dem Probematerial umfasst.

14. Verfahren nach Anspruch 12, worin der Schritt des Detektierens eines optischen Signals das Leiten eines Lichtsignals entlang des optischen Detektionspfades und das Bestimmen einer Menge des vom Probenmaterial absorbierten Lichtsignals umfasst.

15. Verfahren nach Anspruch 12, weiters umfassend das Bereitstellen eines ersten, in der planaren mikrofluidischen Vorrichtung vorgesehenen Kanals, wobei der erste Kanal parallel zur Hauptebene der mikrofluidischen Vorrichtung und in Fluid-Kommunikation mit dem Detektionskanalsegment ist.

16. Verfahren nach Anspruch 15, worin der erste Kanal ebenfalls in Fluid-Kommunikation mit einer Probekapillare ist, die an der mikrofluidischen Vorrichtung angebracht ist und sich von ihr erstreckt, und worin der Schritt des Einbringens des Probematerials in das Detektionskanalsegment das Ziehen des Probematerials aus einer Probematerialquelle in die Probekapillare und das Befördern des Probematerials in das erste Kanalsegment und in das Detektionskanalsegment umfasst.

## Revendications

1. Système microfluidique ayant une détection optique renforcée, comprenant:
un dispositif microfluidique et un système de détection (330),
le dispositif microfluidique comprenant:
une structure de corps qui est plane dans un premier plan, la structure de corps comprenant au moins des première (320), deuxième (322), et troisième (324) couches de substrat planes, une première surface du premier substrat étant liée à une première surface du deuxième substrat, et une première surface du troisième substrat étant liée à une deuxième surface du deuxième substrat, la deuxième surface du deuxième substrat étant opposée à la première surface du deuxième substrat;
un premier segment formant canal (302a) étant défini à une interface des première et deuxième couches de substrat planes;
un deuxième segment formant canal (302b);
un segment de canal de détection (310) ayant une première et une seconde extrémité, où la première extrémité du segment de canal de détection est en communication fluidique avec le premier segment formant canal, et où la seconde extrémité du segment de canal de détection est en communication fluidique avec le deuxième segment de canal;
**caractérisé en ce que**:
le deuxième segment de canal est défini à une interface des deuxième et troisième couches de substrat planes;
le segment de canal de détection est orienté sensiblement orthogonalement au premier plan; et
le système de détection (330) est en communication de détection avec le segment de canal de détection et est orienté pour réaliser un chemin de détection sensiblement le long d'un axe longitudinal du segment de canal de détection.

2. Système microfluidique selon la revendication 1, dans lequel le système de détection comprend un système de mesure d'absorbance.

3. Système microfluidique selon la revendication 2, dans lequel le système de détection d'absorbance comprend:
une source de lumière;
un train optique positionné d'une manière proximale à la première extrémité du segment de canal de détection, où le train optique dirige la lumière de la source de lumière à travers la première extrémité du segment de canal de détection; et
un détecteur de lumière positionné d'une manière proximale à la seconde extrémité du segment de canal de détection pour détecter une quantité de lumière qui passe à travers le segment de canal de détection le long du chemin de détection.

4. Système microfluidique selon la revendication 1, dans lequel le segment de canal de détection possède une zone en section transversale qui représente entre environ 0,1 et 5 fois une zone en section transversale d'au moins un des premier et deuxième segments formant canal.

5. Système microfluidique selon la revendication 1, dans lequel la zone en section transversale du segment du canal de détection représente environ 0,5 à environ 2 fois la zone en section transversale d'au moins un des premier et deuxième segments formant canal.

6. Système microfluidique selon la revendication 1, dans lequel le segment de canal de détection représente environ 10 µm à environ 1 mm en longueur.

7. Système microfluidique selon la revendication 1, dans lequel le segment de canal de détection a une longueur d'environ 50 à environ 500 µm.

8. Système microfluidique selon la revendication 1, dans lequel le segment de canal de détection a une longueur d'environ 100 à environ 250 µm.

9. Système microfluidique selon la revendication 1, dans lequel le segment de canal de détection comprend un volume qui est inférieur à 100 nl.

10. Système microfluidique selon la revendication 1, dans lequel le segment de canal de détection comprend un volume qui est inférieur à 10 nl.

11. Système microfluidique selon la revendication 1, dans lequel le segment de canal de détection comprend un volume qui est inférieur à 1 nl.

12. Procédé d'exécution d'une opération analytique dans un canal à micro-échelle d'un système microfluidique selon la revendication 1, comprenant:
réaliser un dispositif microfluidique plane ayant un segment de canal de détection;
introduire un matériau d'échantillon dans le segment de canal de détection, le matériau d'échantillon comprenant une concentration d'un matériau optiquement détectable;
réaliser un chemin de détection optique à travers le matériau d'échantillon dans le segment de canal de détection; et
détecter un signal optique le long du chemin de détection optique,
**caractérisé en ce que**:
le segment de canal de détection est sensiblement orthogonal à un plan majeur du dispositif microfluidique plane; et
le chemin de détection optique à travers le matériau d'échantillon dans le segment de canal de détection se situe à un angle qui est sensiblement parallèle à un axe longitudinal du premier segment de canal de détection.

13. Procédé selon la revendication 12, dans lequel l'étape de détection d'un signal optique comprend la direction d'un signal de lumière le long du chemin de détection optique et la détection d'une quantité de fluorescence du matériau d'échantillon.

14. Procédé selon la revendication 12, dans lequel l'étape de détection d'un signal optique comprend la direction d'un signal de lumière le long du chemin de détection optique et la détermination d'une quantité du signal de lumière absorbée par le matériau d'échantillon.

15. Procédé selon la revendication 12, comprenant en outre la réalisation d'un premier canal disposé dans le dispositif microfluidique plan, le premier canal étant parallèle au plan majeur du dispositif microfluidique et en communication fluidique avec le segment de canal de détection.

16. Procédé selon la revendication 15, dans lequel le premier canal est également en communication fluidique avec un capillaire d'échantillonnage qui est fixé à et s'étend du dispositif microfluidique, et où l'étape d'introduction du matériau d'échantillon dans le segment de canal de détection comprend l'aspiration du matériau d'échantillon d'une source de matériau d'échantillon dans le capillaire d'échantillonnage et le transport du matériau d'échantillon dans le premier segment de canal et dans le segment de canal de détection.
